# FASCICULE DE BREVET EUROPEEN

(11) **EP 3 077 637 B1**
(45) Date de publication et mention de la délivrance du brevet: **21.02.2018**
(21) Numéro de dépôt: 14814965.1
(22) Date de dépôt: 26.11.2014
(51) Int. Cl.: F01N 11/00, F02D 41/02, F02D 41/14

(54) **PROCÉDÉ D'OPTIMISATION DE LA DÉTECTION D'UN CATALYSEUR DÉFAILLANT**
VERFAHREN ZUR OPTIMIERUNG DER DETEKTION EINES FEHLERHAFTEN KATALYSATORS
METHOD FOR OPTIMIZING THE DETECTION OF A DEFECTIVE CATALYTIC CONVERTER

(30) Priorité: 05.12.2013 FR 1362182
(43) Date de publication de la demande: 12.10.2016
(73) Titulaire: PSA Automobiles SA, 78300 Poissy (FR)
(72) Inventeur: CLIMAUD, Pascal, F-92420 Vaucresson (FR); FOUSSARD, Patrick, F-92310 Sevres (FR)
(74) Mandataire: Renous Chan, Véronique
(86) Numéro de dépôt international: PCT/FR2014/053049
(87) Numéro de publication internationale: WO 2015/082805

(56) Documents cités:
- DE-A1- 4 133 117
- DE-A1- 4 308 180
- DE-A1- 19 749 400
- DE-A1-102007 031 768
- DE-A1-102011 016 533
- US-A1- 2012 285 141

## Description

La présente invention porte sur un procédé d'optimisation de la détection d'un catalyseur défaillant, c'est-à-dire un catalyseur ne répondant plus à des normes imposées de dépollution.

Le document DE 10 2007 031768 A1 décrit une méthode pour contrôler l'échauffement d'un catalyseur en fonction de l'état de vieillissement du catalyseur.

De façon connue en soi, la ligne d'échappement d'un moteur thermique comporte un ou plusieurs catalyseurs. La matrice du catalyseur est imprégnée d'une composition comportant un matériau aux propriétés de stockage réversible d'oxygène en fonction de la richesse des gaz d'échappement. Ce matériau permet de stocker l'oxygène lorsque le moteur fonctionne en régime pauvre (rapport air/carburant supérieur à 1) pour le restituer en régime riche (rapport air/carburant inférieur ou égal à 1). Il fait habituellement partie de la composition du catalyseur trois voies, et il en assure le bon fonctionnement, car il contribue à assurer en permanence l'oxydation du monoxyde de carbone (CO) et des hydrocarbures imbrûlés (HC) et la réduction des particules d'oxyde d'azote (NOx).

Le diagnostic de vieillissement du catalyseur est basé sur une mesure de la capacité de stockage en oxygène du matériau d'imprégnation précité ou mesure d'OSC (pour "oxygen storage capacity" en anglais) ou un indicateur équivalent. En effet, la capacité de stockage en oxygène diminue avec le vieillissement du catalyseur, car plus le catalyseur vieillit, moins il contient de matériau actif capable de stocker de l'oxygène.

La mesure d'OSC est utilisée car il existe une corrélation, non linéaire, entre cet indicateur et les émissions de particules d'oxyde d'azote (NOx) émises en aval du catalyseur. Or des normes, telles que la norme Euro 5+, imposent que le diagnostic du catalyseur soit réalisé en fonction des émissions de NOx. La norme impose également de surveiller le niveau des hydrocarbures HC mais le seuil d'émissions de HC est atteint bien plus tard que celui des NOx.

On distingue ainsi trois états pour le catalyseur:
- l'état neuf,
- un état dit "vieilli" pour lequel le niveau de vieillissement correspond à un niveau d'émission de particules NOx supérieur à un premier seuil S1 mais inférieur à un deuxième seuil S2, on parle également de "catalyseur à durabilité", et
- un état défaillant pour lequel le niveau de vieillissement correspond à un niveau d'émission de NOx égal ou supérieur au deuxième seuil S2.

Le seuil d'émissions de NOx à la durabilité S1 est resté constant avec l'évolution des normes. Ce seuil est de 60mg/km sur le cycle réglementaire. En revanche, le seuil S2 d'émissions de NOx au-delà duquel le catalyseur doit être détecté comme défaillant a diminué de manière importante avec l'évolution des normes. Ainsi, le seuil S2 est passé de 300 mg/km en norme Euro 5+, à 150mg/km en norme Euro 6.1, puis passera vraisemblablement à 90mg/km en norme Euro 6.2.

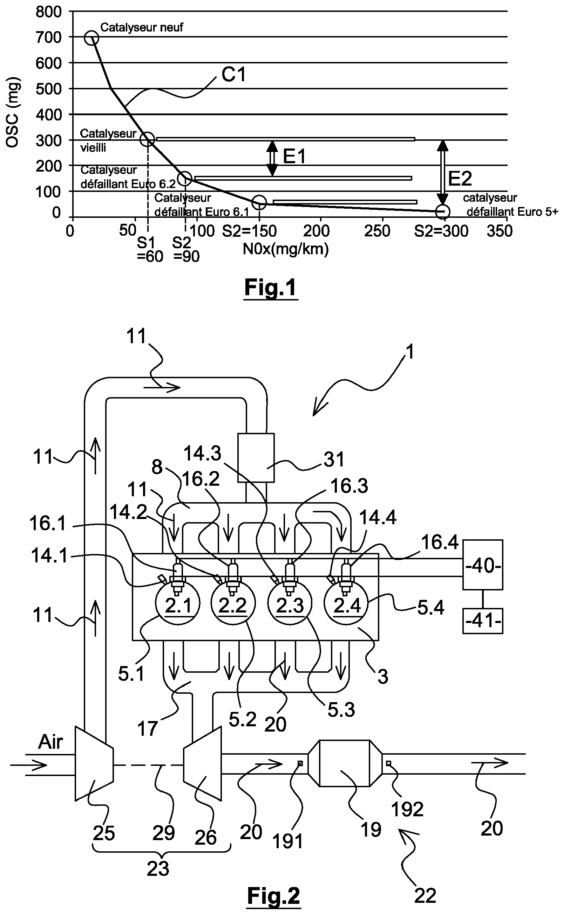

Comme on peut le constater sur la courbe C1 de la figure 1, une telle diminution du seuil S2 réduit considérablement l'écart d'OSC entre un catalyseur défaillant et un catalyseur à durabilité. L'écart E1 correspondant à la norme Euro 6.2 est ainsi beaucoup plus faible que l'écart E2 correspondant à la norme Euro 5+. Du fait de la disparité des résultats de mesures d'OSC, il devient donc très difficile de distinguer les deux états du catalyseur en sorte qu'il existe un risque élevé de non détection d'un catalyseur défaillant ou de fausse détection en considérant comme défaillant un catalyseur vieilli qui ne l'est pas encore.

La présente invention vise à remédier efficacement à cet inconvénient en proposant un procédé d'optimisation de la détection d'un catalyseur défaillant de moteur thermique ne répondant plus à des normes de dépollution, tel que, à partir d'un niveau de vieillissement du catalyseur ou d'un kilométrage prédéterminé et au minimum jusqu'à ce que soit atteint un niveau de vieillissement du catalyseur correspondant à un seuil limite d'émission de particules polluantes d'oxyde d'azote (NOx), ledit procédé comporte l'étape d'adapter un fonctionnement dudit moteur thermique de manière à réduire des émissions de particules d'oxyde d'azote (NOₓ) et facultativement l'étape d'orienter une efficacité dudit catalyseur vers un traitement des particules d'oxyde d'azote.

Ainsi, l'invention ne retarde pas le vieillissement du catalyseur mais fait en sorte que le catalyseur doit être davantage vieilli avant d'être considéré comme étant défaillant. On augmente ainsi l'écart d'OSC entre un catalyseur à l'état vieilli et un catalyseur défaillant, ce qui facilite donc la détection d'un catalyseur défaillant. Avec l'invention, on peut retarder le passage à la déclaration de l'état défaillant du catalyseur de plusieurs milliers de kilomètres, voire plusieurs dizaines de milliers de kilomètres de roulage du véhicule.

En outre, l'invention peut être mise en oeuvre en modifiant uniquement le fonctionnement logiciel du contrôle du moteur, ce qui en limite le coût.

Selon une mise en oeuvre, pour orienter l'efficacité dudit catalyseur vers le traitement des particules d'oxyde d'azote (NOx), ledit procédé comporte l'étape d'augmenter une durée ou une puissance de chauffe du catalyseur.

Selon une mise en oeuvre, ledit procédé comporte l'étape d'augmenter une température des gaz d'échappement en sortie dudit moteur thermique pour faciliter un amorçage du catalyseur, en sélectionnant un régime plus élevé, avec un rendement de combustion (temporairement) plus faible par rapport à un fonctionnement standard dudit moteur thermique.

Ledit procédé comporte l'étape de modifier un réglage de balance de rejet entre des particules de monoxyde de carbone (CO) et les particules oxyde d'azote (NOx) en modifiant une richesse de mélange air/carburant alimentant ledit moteur thermique.

Ledit procédé comporte l'étape de faire fonctionner le moteur thermique à une richesse supérieure à un réglage standard.

Selon une mise en oeuvre, le niveau de vieillissement dudit catalyseur est déterminé par mesure d'une capacité de stockage d'oxygène (OSC) dudit catalyseur.

Selon une mise en oeuvre, la mesure de la capacité de stockage en oxygène dudit catalyseur est effectuée à l'aide de deux sondes situées respectivement en amont et en aval du catalyseur.

L'invention a également pour objet un calculateur moteur comportant une mémoire stockant des instructions logicielles pour la mise en oeuvre du procédé d'optimisation de la détection d'un catalyseur défaillant selon l'invention.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, représente une évolution de la mesure d'OSC correspondant à un vieillissement du catalyseur en fonction d'un niveau d'émission de particules NOx lors de la mise en oeuvre d'une stratégie de commande standard du moteur;
La figure 2 est une représentation schématique d'un exemple de moteur thermique mettant en oeuvre le procédé selon la présente invention;
La figure 3 représente la courbe de la figure 1 prise en comparaison avec la courbe obtenue suite à la mise en oeuvre du procédé selon la présente invention.

Les éléments identiques, similaires, ou analogues conservent les mêmes références d'une figure à l'autre.

La figure 2 montre un moteur 1 à combustion interne à quatre cylindres 2.1-2.4 turbocompressé. Le moteur 1 comprend un bloc moteur 3 dans lequel sont ménagés des chambres 5.1-5.4 de combustion des cylindres 2.1-2.4.

Un collecteur d'admission 8 reçoit de l'air à introduire dans les chambres 5.1-5.4 de combustion. L'air d'admission est aspiré depuis l'extérieur du véhicule, par l'intermédiaire d'un filtre à air (non représenté). Le sens de déplacement de l'air d'admission est symbolisé par les flèches 11.

Une injection de carburant à l'intérieur les chambres 5.1-5.4 de combustion est effectuée au moyen d'injecteurs référencés 14.1-14.4. En outre, des bougies 16.1-16.4 permettent d'enflammer le mélange gazeux d'air et de carburant à l'intérieur des chambres 5.1-5.4 de combustion.

Par ailleurs, un collecteur d'échappement 17 reçoit les émissions de gaz produites par la combustion et les dirige vers une ligne d'échappement 22 suivant les flèches 20.

Les cylindres 2.1-2.4, qui fonctionnent de manière classique, présentent chacun au moins une soupape d'entrée pour leur mise en relation avec le collecteur d'admission 8 et au moins une soupape de sortie pour leur mise en relation avec le collecteur d'échappement 17.

Le moteur 1 comporte en outre un turbocompresseur 23 comprenant un étage de compression 25 et un étage de détente 26. L'étage de compression 25 comprime l'air d'admission afin d'optimiser le remplissage des chambres 5.1-5.4 de combustion. L'écoulement des gaz d'échappement entraîne en rotation une turbine de l'étage de détente 26 qui entraîne alors en rotation une turbine de l'étage de compression 25 par l'intermédiaire d'un arbre d'accouplement 29 reliant les deux turbines entre elles.

Un échangeur 31 situé en amont du collecteur d'admission 8, appelé refroidisseur d'air de suralimentation (RAS), est destiné à refroidir l'air entrant dans le collecteur d'admission 8. Le refroidissement est effectué de manière à d'obtenir de l'air frais à l'admission ayant une température adaptée à la combustion du mélange d'air et de carburant dans les chambres 5.1-5.4 des cylindres.

Un calculateur 40 est associé à une mémoire 41 contenant des instructions logicielles pour gérer notamment la commande de l'injection et de l'allumage du moteur.

Par ailleurs, la ligne d'échappement 22 comporte au moins un catalyseur d'échappement 19 adapté à traiter les polluants avant leur expulsion vers l'atmosphère extérieure. La matrice du catalyseur 19 est imprégnée d'une composition comportant un matériau aux propriétés de stockage réversible d'oxygène en fonction de la richesse des gaz d'échappement. Ce matériau permet de stocker l'oxygène lorsque le moteur fonctionne en régime pauvre (rapport air/carburant supérieur à 1) pour le restituer en régime riche (rapport air/carburant inférieur ou égal à 1). Il fait habituellement partie de la composition du catalyseur trois voies, et il en assure le bon fonctionnement, car il contribue à assurer en permanence l'oxydation du monoxyde de carbone CO et des hydrocarbures imbrûlés HC et la réduction des oxydes d'azotes NOx. A titre d'exemple, le matériau du catalyseur 19 est choisi à base de cérine, un oxyde de cérium apte à capter réversiblement de l'oxygène. La cérine peut être associée dans une formulation donnée à d'autres composés passifs, par exemple pour faciliter sa mise en oeuvre par imprégnation.

Le diagnostic de vieillissement du catalyseur 19 est basé sur une mesure de la capacité de stockage en oxygène du matériau d'imprégnation du catalyseur 19 précité ou mesure d'OSC (pour "oxygen storage capacity" en anglais) ou un indicateur équivalent. En effet, la capacité de stockage en oxygène diminue avec le vieillissement du catalyseur 19, car plus le catalyseur 19 vieillit, moins il contient de matériau actif capable de stocker de l'oxygène.

La mesure d'OSC est effectuée au moyen de deux sondes à oxygène 191, 192 situées respectivement en amont et en aval du catalyseur 19 à diagnostiquer. Ces sondes 191, 192 peuvent être de type stoechiométriques (on/off) ou linéaires (proportionnelles). Alternativement, il sera possible d'estimer le niveau d'OSC en analysant un niveau d'oscillation du signal de sortie de la sonde aval 192.

Conformément au procédé selon l'invention, lorsque le catalyseur 19 est neuf et jusqu'à ce que le catalyseur 19 présente un premier niveau de vieillissement à OSC1 correspondant à un premier seuil S1 d'émission de particules NOx par exemple de l'ordre de 60mg/km ou jusqu'à un kilométrage prédéterminé par exemple de l'ordre de 160000 kilomètres, le calculateur 40 commande le moteur thermique 1 de manière classique avec notamment des niveaux standards de richesse qui dépendent de la demande de couple effectuée par le conducteur.

A partir de ce premier niveau de vieillissement correspondant à OSC1, le catalyseur 19 est considéré comme ayant un état vieilli dit aussi "catalyseur durabilité". Un catalyseur à l'état vieilli n'est pas encore à considérer comme étant défaillant.

A partir de ce premier niveau de vieillissement à OSC1 et au minimum jusqu'à ce que le catalyseur 19 atteigne un deuxième niveau de vieillissement à OSC2 correspondant à un seuil S2 limite d'émission d'oxyde d'azote, par exemple de l'ordre de 90mg/km, à partir duquel le catalyseur 19 est considéré comme défaillant, le fonctionnement du moteur thermique 1 est adapté par le calculateur 40 de manière à réduire des émissions de particules polluantes d'oxyde d'azote NOx.

La modification du réglage du moteur 1 consiste à modifier un réglage d'une balance de rejet entre le monoxyde de carbone CO et les oxydes d'azote NOx en modifiant la richesse du mélange air/carburant alimentant le moteur thermique. On note à cet égard que le catalyseur 19 fait fonctionner le moteur autour d'un rapport air/carburant valant 1. En effet, la richesse du mélange oscille en permanence autour de la richesse 1 en fonction notamment de l'application, de la motorisation, du point de fonctionnement du moteur et du catalyseur 19. Le réglage est modifié pour que le moteur fonctionne à une richesse de mélange supérieure au réglage standard afin de réduire les émissions de NOx en aval du catalyseur 19.

En complément facultatif, une efficacité du catalyseur 19 est orientée vers un traitement des particules NOx. Ainsi, il est possible d'augmenter la durée ou la puissance de chauffe du catalyseur 19, ce qui permet de réduire les émissions d'oxyde d'azote NOx mais également de monoxyde de carbone CO et d'hydrocarbure HC au début du cycle réglementaire et donc sur le cycle global. Cet effet pourra être obtenu en augmentant une température des gaz d'échappement en sortie du moteur 1 pour faciliter l'amorçage du catalyseur 19, en sélectionnant un régime plus élevé, avec un rendement de combustion temporairement plus faible par rapport à un fonctionnement standard du moteur.

On vient donc modifier le fonctionnement du moteur, dès qu'un seuil d'émission des NOx est atteint, pour favoriser le traitement des NOx, en modifiant le comportement du catalyseur, en chaque point de fonctionnement du moteur et de façon permanente. Une mise en oeuvre consiste donc à modifier la richesse, de façon permanente dès le seuil en question franchi, (le réchauffement des gaz étant maintenu de faible ampleur), et facultativement à avoir des gaz d'échappement plus chauds.

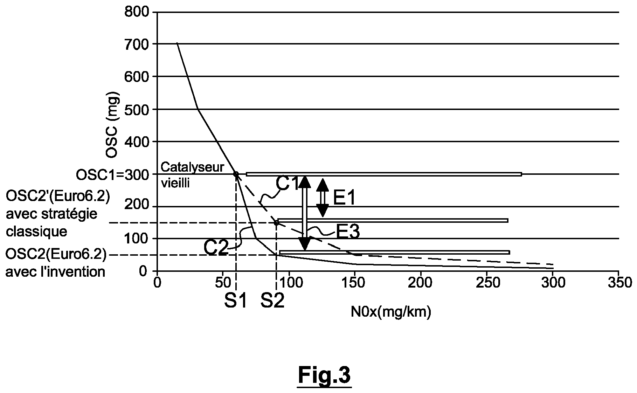

Ainsi, à iso-vieillissement du catalyseur et donc iso-niveau d'OSC, les émissions de NOx seront réduites. Il faudra donc que le catalyseur 19 soit davantage vieilli pour atteindre le niveau d'émission de NOx engendrant une détection de catalyseur défaillant. Ainsi, comme cela ressort de la figure 3, le deuxième niveau de vieillissement à OSC2 correspondant au seuil S2 obtenu avec le procédé selon l'invention (cf. courbe C2) est inférieur au deuxième niveau de vieillissement à OSC2' qui aurait été atteint si les émissions de particules NOx n'avaient pas été réduites après le premier seuil de vieillissement correspondant au seuil d'émission S1 (cf. courbe C1).

En conséquence, l'écart E3 d'OSC entre un catalyseur à l'état vieilli et un catalyseur défaillant suite à la mise en oeuvre du procédé selon l'invention est plus grand que l'écart E1 obtenu suite à la mise en oeuvre d'une stratégie de commande standard, ce qui permet de faciliter la détection d'un catalyseur défaillant.

Comme cela ressort de la figure 3, le réglage particulier du moteur permettant de limiter les émissions de NOx sélectionné à partir du niveau de vieillissement correspondant au seuil d'émission S1 est conservé de préférence même après la détection de la défaillance du catalyseur 19 et ce jusqu'au remplacement du catalyseur 19.

Bien entendu, la description qui précède a été donnée à titre d'exemple uniquement et ne limite pas le domaine de l'invention dont on ne sortirait pas en remplaçant les détails d'exécution par tous autres équivalents.

L'invention s'applique ainsi à tous les moteurs à combustion interne, notamment essence, quel que soit le mode d'injection de carburant, c'est-à-dire aussi bien en mode d'injection directe qu'un mode d'injection indirecte.

L'invention s'applique ainsi également aussi bien aux moteurs équipés d'un ou plusieurs turbocompresseurs qu'aux moteurs qui en sont dépourvus (moteurs atmosphériques).

## Revendications

1. Procédé d'optimisation de la détection d'un catalyseur (19) défaillant de moteur thermique (1) ne répondant plus à des normes de dépollution, **caractérisé en ce qu'**à partir d'un niveau de vieillissement (OSC1) du catalyseur (19) ou d'un kilométrage prédéterminé et au minimum jusqu'à ce que soit atteint un niveau de vieillissement du catalyseur (19) correspondant à un seuil limite (S2) d'émission de particules polluantes d'oxyde d'azote (NOx), ledit procédé comporte l'étape d'adapter un fonctionnement dudit moteur thermique (1) de manière à réduire des émissions de particules d'oxyde d'azote (NOx) le niveau de vieillissement dudit catalyseur (19) étant déterminé par mesure d'une capacité de stockage d'oxygène (OSC) dudit catalyseur (19), l'adaptation comportant une modification du réglage de balance de rejet entre des particules de monoxyde de carbone (CO) et les particules oxyde d'azote (NOx) en modifiant une richesse de mélange air/carburant alimentant ledit moteur thermique (1) de façon permanente de façon à faire fonctionner le moteur thermique (1) à une richesse supérieure à un réglage standard.

2. Procédé selon la revendication 1, **caractérisé en ce que**, pour orienter l'efficacité dudit catalyseur vers le traitement des particules d'oxyde d'azote (NOx), il comporte l'étape d'augmenter une durée ou une puissance de chauffe du catalyseur (19).

3. Procédé selon la revendication 2, **caractérisé en ce qu'**il comporte l'étape d'augmenter une température des gaz d'échappement en sortie dudit moteur thermique (1) pour faciliter un amorçage du catalyseur (19), en sélectionnant un régime plus élevé, avec un rendement de combustion temporairement plus faible par rapport à un fonctionnement standard dudit moteur thermique (1).

4. Procédé selon l'une des revendications précédentes, **caractérisé en ce que** la mesure de la capacité de stockage en oxygène dudit catalyseur (19) est effectuée à l'aide de deux sondes (191, 192) situées respectivement en amont et en aval du catalyseur (19).

5. Calculateur moteur (40) comportant une mémoire (41) stockant des instructions logicielles pour la mise en oeuvre du procédé d'optimisation de la détection d'un catalyseur défaillant selon l'une quelconque des revendications précédentes.

## Patentansprüche

1. Verfahren zum Optimieren der Erkennung eines defekten Katalysators (19) eines Verbrennungsmotors (1), der Reinigungsnormen nicht mehr erfüllt, **dadurch gekennzeichnet, dass** ab einem Alterungsgrad (OSC1) des Katalysators (19) oder einer vorbestimmten Kilometerleistung und wenigstens, bis ein Alterungsgrad des Katalysators (19) erreicht ist, der einem Emissionsgrenzwert (S2) an Stickoxid- (NOx) Schadstoffpartikeln entspricht, das Verfahren den Schritt des Anpassens eines Betriebs des Verbrennungsmotors (1) derart umfasst, dass Emissionen an Stickoxid- (NOx) Partikeln reduziert werden, wobei der Alterungsgrad des Katalysators (19) durch Messen einer Sauerstoffspeicherkapazität (OSC) des Katalysators (19) bestimmt wird, wobei das Anpassen ein Modifizieren der Einstellung der Ausstoßbilanz zwischen Kohlenmonoxid-(CO) Partikeln und den Stickoxid- (NOx) Partikeln durch dauerhaftes Modifizieren eines Verhältnisses von Luft-Kraftstoff-Gemisch, welches den Verbrennungsmotor (1) speist, umfasst, um den Verbrennungsmotor (1) bei einem Verhältnis oberhalb einer Standardeinstellung laufen zu lassen.

2. Verfahren nach Anspruch 1, **dadurch gekennzeichnet, dass** es, um die Effizienz des Katalysators auf die Behandlung der Stickoxid- (NOx) Partikel auszurichten, den Schritt des Erhöhens einer Heizdauer oder-leistung des Katalysators (19) umfasst.

3. Verfahren nach Anspruch 2, **dadurch gekennzeichnet, dass** es, um ein Starten des Katalysators (19) zu erleichtern, den Schritt des Erhöhens einer Temperatur der Abgase am Ausgang des Verbrennungsmotors (1) durch Auswählen einer höheren Drehzahl mit einem in Bezug auf einen Standardbetrieb des Verbrennungsmotors (1) vorübergehend niedrigeren Verbrennungswirkungsgrad umfasst.

4. Verfahren nach einem der vorstehenden Ansprüche, **dadurch gekennzeichnet, dass** das Messen der Sauerstoffspeicherkapazität des Katalysators (19) mithilfe von zwei Sonden (191, 192) erfolgt, die jeweils stromaufwärts und stromabwärts des Katalysators (19) liegen.

5. Motorrechner (40), umfassend einen Speicher (41), der Softwareanweisungen zum Umsetzen des Verfahrens zum Optimieren der Erkennung eines defekten Katalysators nach einem der vorstehenden Ansprüche speichert.

## Claims

1. Method for optimising the detection of a faulty catalyst (19) of a heat engine (1) no longer meeting depollution standards, **characterised in that**, from a level of ageing (OSC1) of the catalyst (19) or from a predetermined mileage and at a minimum until a level of ageing of the catalyst (19) corresponding to a limit threshold (S2) of emission of polluting particles of nitrogen oxide (NOx) is reached, said method comprises the step of adapting a functioning of said heat engine (1) so as to reduce emissions of particles of nitrogen oxide (NOx), the level of aging of said catalyst (19) being determined by measuring an oxygen storage capacity (OSC) of said catalyst (19), the adaptation comprising a modification of the adjustment of rejection balance between particles of carbon monoxide (CO) and the particles of nitrogen oxide (NOx) by modifying a richness of the air/fuel mixture supplying said heat engine (1) continuously so as to operate the heat engine (1) at a richness higher than a standard setting.

2. Method according to claim 1, **characterised in that**, in order to orient the efficacy of said catalyst towards the treatment of particles of nitrogen oxide (NOx), it comprises the step of increasing a duration or power of heating of the catalyst (19).

3. Method according to claim 2, **characterised in that** it comprises the step of increasing a temperature of the exhaust gases discharged from said heat engine (1) in order to facilitate warming-up of the catalyst (19), by selecting a higher speed, with a temporarily lower combustion efficiency compared with standard operation of the heat engine (1).

4. Method according to any of the preceding claims, **characterised in that** the measurement of the oxygen storage capacity of said catalyst (19) is carried out by means of two sensors (191, 192) situated respectively upstream and downstream of the catalyst (19).

5. Engine computer (40) comprising a memory (41) storing software instructions for implementing the method for optimisation of the detection of a faulty catalyst according to any of the preceding claims.
